# EUROPÄISCHE PATENTSCHRIFT

(11) **EP 0 502 288 B1**
(45) Veröffentlichungstag und Bekanntmachung des Hinweises auf die Patenterteilung: **20.10.1993**
(21) Anmeldenummer: 92100394.3
(22) Anmeldetag: 11.01.1992
(51) Int. Cl.: B60K 13/04, F01N 7/18

(54) **Aufhängung von Auspuffanlagen**
Suspension of exhaust devices
Suspension de pots d'échappement

(30) Priorität: 06.03.1991 DE 4107185
(43) Veröffentlichungstag der Anmeldung: 09.09.1992
(73) Patentinhaber: MERCEDES-BENZ AG, 70327 Stuttgart (DE)
(72) Erfinder: Volker, Unckrich, Dipl.-Ing., D-7067 Plüderhausen (DE)

(56) Entgegenhaltungen:
- DE-A- 1 505 498
- DE-C- 3 916 872
- US-A- 4 972 921

## Beschreibung

Die Erfindung betrifft einen unter dem Fahrzeugboden eines Kraftfahrzeuges befestigten Schalldämpfer einer Auspuffanlage gemäß dem 1. Patentanspruch.

Aus der US 4,972,921 ist eine Auspuffanlage für einen Verbrennungsmotor bekannt, dessen Schalldämpfer von beiderseits offenen Rohren durchragt ist. Durch diese Rohre sind Schrauben geführt, mittels der der Schalldämpfer in einfachster Weise angeschraubt ist. Eine derartige starre Befestigung des Schalldämpfers ist jedoch an einem Kraftfahrzeug nicht einsetzbar, da die Auspuffanlage den Schwingungen des elastisch aufgehängten Verbrennungsmotors folgen muß.
Herkömmliche Auspuffanlagen von Kraftfahrzeugen sind, wie aus der DE 28 03 270 A1 ersichtlich, mittels elastischer Aufhängungsteile am Fahrzeugboden befestigt. Dabei muß bei der Auswahl der Aufhängungspunkte auf problemlose Montierbarkeit geachtet werden, so daß die optimalen Aufhängungspunkte über dem Schwerpunkt von insbesondere relativ großflächigen, flachbauenden Schalldämpfer wegen Unzugänglichkeit zumeist ausscheiden. Die dadurch erzwungene schwerpunktferne Aufhängung am Auspuffrohr oder an den Randbereichen der Schalldämpfer führt jedoch zu erhöhten mechanischen Belastungen der Auspuffanlage, welches insbesondere an den kritischen geschweißten Übergangsstellen des Auspuffrohres in den Schalldämpfer aufwendige stabilitätserhöhende Maßnahmen oder zusätzlich Aufhängungen erfordert.

Weiterhin kommt es durch die schwerpunktferne Aufhängung der Schalldämpfer zu vergrößerten Schwingbewegungen der Auspuffanlage, welche wiederum die mechanischen Belastungen erhöhen und zu vergrößerten Abständen zu den benachbarten Bauteilen zwingen.
Für die Aufhängung von Auspuffanlagen geeignete elastische Aufhängungsteile sind z.B. aus der DE 26 58 358 Al bekannt, wobei in dieser Schrift eine besonders vorteilhafte Ausführungsform mit Stahleinlagen dargestellt ist.

Es ist die Aufgabe der Erfindung, einen Schalldämpfer für eine Auspuffanlage darzustellen, der eine im Bereich des Schwerpunktes des Schalldämpfers angeordnete, leicht montierbare, elastische Aufhängung aufweist und durch die der Schalldämpfer am Fahrzeugboden eng anschließend und raumsparend aufhängbar ist.

Erfindungsgemäß wird die Aufgabe durch die kennzeichnenden Merkmale des Patentanspruches 1 gelöst.
Durch die erfindungsgemäße, leicht montierbare und elastische Befestigung eines Schalldämpfers mittels einer an den Fahrzeugboden eng anschließenden Aufhängung im Schwerpunkt des relativ großflächigen und flachbauenden Schalldämpfern kann bei Beibehaltung einer minimalen Zahl von Aufhängungspunkten die mechanische Belastung der Auspuffanlage wesentlich vermindert werden. Dadurch werden sonst notwendige festigkeitserhöhende Maßnahmen überflüssig, bzw. die Anzahl der sonst notwendigen Aufhängungspunkte kann minimiert werden.
Durch die aufgrund der schwerpunktnahen Aufhängung erzielte geringe Schwingbewegung der Auspuffanlage kann im weiteren der notwenige Abstand zu benachbarten Bauteilen minimiert werden, wodurch im Effekt ein geringerer Bauraum erforderlich wird oder die Schalldämpfer größer dimensioniert werden können.

In den Unteransprüchen werden zweckmäßige Ausführungsformen der Erfindung offenbart.

Die Erfindung wird nachfolgend anhand von Darstellungen näher erläutert. Es zeigen
- Fig. 1:: eine erfindungsgemäße Aufhängung in einem Längsausschnitt an einem in Seitenansicht dargestellten Schalldämpfer;
- Fig. 2:: die Aufhängung nach Fig. 1 in einer Draufsicht;
- Fig. 3 u. 5:: jeweils einen Längsschnitt durch eine weitere Ausführungsform einer erfindungsgemäßen Aufhängung;
- Fig. 4 u. 6:: um jeweils 90° verdrehte Längsschnitte zu den und Ansichten der in Fig. 3 und 5 dargestellten Ausführungsformen.

Ein relativ großflächiger, flachbauender Schalldämpfer 1, dessen äußere Form von einer Oberschale 2 und einer mit der Oberschale 2 fest verbundenen Unterschale 3 gebildet wird, ist durch die Auspuffrohre 4 in die Auspuffanlage integriert.

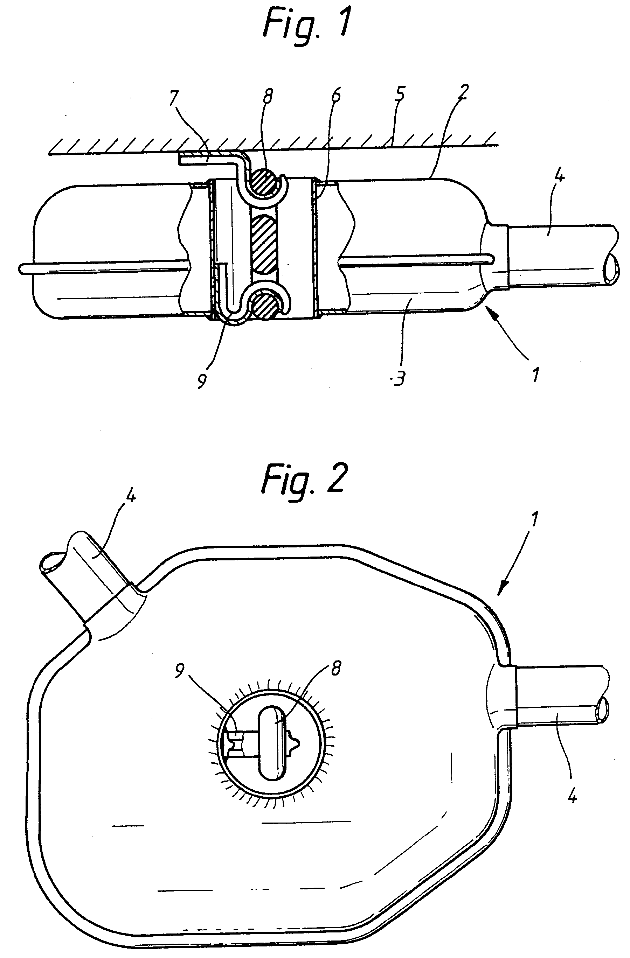

Rechtwinklig zum Fahrzeugboden 5 ist durch den Schwerpunkt des Schalldämpfers 1 ein hohlprofilartiges Bauteil, vorzugsweise ein Rohrstück 6 geführt, welches an der Oberschale 2 und an der Unterschale 3 abschließt und mit diesen verschweißt ist. Das Rohrstück 6 ist so dimensioniert, daß ein in einem am Fahrzeugboden 5 befestigten Halter 7 eingehängtes elastisches Aufhängungssteil 8 durch das Rohrstück 6 führbar ist. Das elastische Aufhängungsteil 8 ist ein aus Gummi oder gummiähnlichen Material bestehendes, im wesentlichen ringförmiges oder ovales Formteil, daß an seinen Enden Ausnehmungen oder andere Ausformungen zum Einhängen in den fahrzeugseitigen Halter 7 sowie des auspuffseitigen Befestigungselementes aufweist, wobei die Längsseiten des ovalen Formteiles durch Stege verbunden und für den Einsatz eines Montagewerkzeuges entsprechende Anschlüsse vorgesehen sein können. In dem Rohrstück 6 ist gemäß der Ausführung in Fig. 1 und 2 dem Halter 7 am Fahrzeugboden 5 gegenüberliegend ein Einhängehaken 9 fest angebracht, in den das elastische Aufhängungsteil 8 mittels eines Montagewerkzeuges problemlos einhängbar ist.

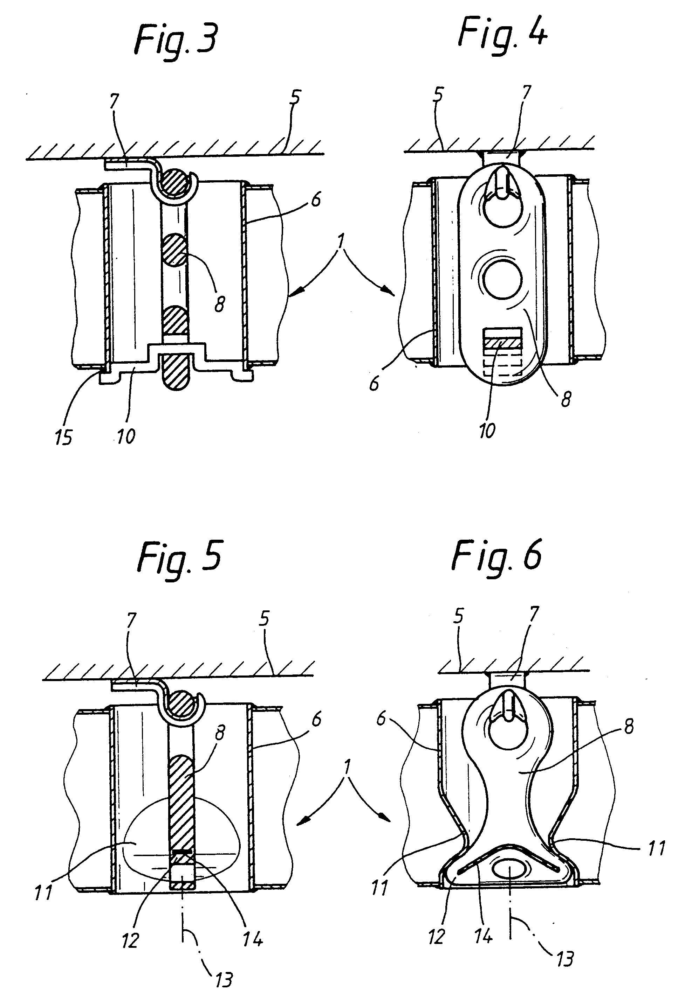

In einem in Fig. 3 und 4 dargestellten Ausführungsbeispiel wird auf einen im Rohrstück 6 fest angebrachten Einhängehaken 9 verzichtet. Statt dessen ist durch das elastische Aufhängungsteil 8 ein sich an der vom Fahrzeugboden abgewandten Seite des Rohrstückes 6 abstützender Bügel 10 durchgeführt. Zur Montage des Bügels 10 muß das elastische Aufhängungsteil 8 mittels eines Montagewerkzeuges soweit gedehnt werden, daß der Bügel 10 frei durch die entsprechende Ausnehmung des elastischen Aufhängungsteiles 8 führbar ist. Nach der Montage ist der Bügel 10 durch das Gewicht des Schalldämpfers 1 bzw. durch die Vorspannung des elastischen Aufhängungsteiles 8 formschlüssig gegen selbständiges Lösen gesichert. Die formschlüssige Sicherung wird dadurch erreicht, daß der sich auf das Ende des Rohrstückes 6 beidseitig abstützende Bügel 10 in das Rohrstück 6 hinein dergestalt mehrstufig abgekröpft ist, daß ein seitliches Verschieben des Bügels 10 auf dem Rohrstück 6 und des elastischen Aufhängungsteiles 8 auf dem Bügel 10 verhindert ist.

Im Ausführungsbeispiel nach Fig. 5 und 6 ist das Rohrstück 6 mit Zwei sich gegenüberliegenden und in den freien Querschnitt des Rohrstückes 6 hineinragenden Erhebungen 11 versehen. In diesem Ausführungsbeispiel ist die vom Fahrzeugboden 5 abgewandte Seite des elastischen Aufhängungsteiles 8 als ein sich zwischen den Erhebungen 11 zum Ende hin verbreiterndes Klemmteil 12 so ausgebildet, daß es mittels einer mit Hilfe eines Montagewerkzeuges ausführbaren Vierteldrehung um die Längsachse 13 und einer gleichzeitigen Längendehnung durch das Rohrstück 6 und mit seiner Schmalseite zwischen den Erhebungen 11 hindurchgeführt werden kann. Nach dem Zurückdrehen in die Normallage und Zurücknehmen der Längendehnung stützt sich das Klemmteil 12 auf den Erhebungen 11 ab und die beabsichtigte formschlüssige Verbindung ist erreicht.
Durch ein einvulkanisiertes Versteifungsblech 14 kann die Stabilität des zwischen den Erhebungen 11 formschlüssig gehaltenen Klemmteiles 12 zusätzlich wesentlich erhöht werden.

## Patentansprüche

1. Schalldämpfer (1) für eine Auspuffanlage, welcher unter dem Fahrzeugboden (5) eines Kraftfahrzeuges befestigt ist und ein den Schalldämpfer (1) im wesentlichen rechtwinklig zum Fahrzeugboden (5) durchragendes, an den Stirnseiten offenes und mit den durchragten Wandungsteilen (2,3) des Schalldämpfers (1) fest verbundenes hohlprofilartiges Bauteil (6) aufweist und der mittels mindestens eines in seiner Längserstreckung überwiegend im Innenraum des hohlprofilartigen Bauteiles (6) angeordneten und mit dem Schalldämpfer formschlüssig verbundenen Aufhängungsteils befestigt wird
**dadurch gekennzeichnet**,
daß das hohlprofilartige Bauteil (6) den Schalldämpfer (1) in seinem Schwerpunkt durchragt und daß das Aufhängungsteil elastisch ist,

2. Schalldämpfer nach Anspruch 1,
**dadurch gekennzeichnet,**
daß die formschlüssige Verbindung zwischen dem elastischen Aufhängungsteil (8) und dem hohlprofilartigen Bauteil (6) mittels eines in dem hohlprofilartigen Bauteil angebrachten Einhängehakens (9) hergestellt ist.

3. Schalldämpfer nach Anspruch 1,
**dadurch gekennzeichnet,**
daß die formschlüssige Verbindung zwischen dem elastischen Aufhängungsteil (8) und dem hohlprofilartigen Bauteil (6) mittels eines beidseitig durch das elastische Aufhängungsteil (8) über den Rand des hohlprofilartigen Bauteiles (6) ragenden und sich am Rand des hohlprofilartigen Bauteiles abstützenden Bügels (10) hergestellt ist.

4. Schalldämpfer nach Anspruch 1,
**dadurch gekennzeichnet,**
daß die formschlüssige Verbindung zwischen dem elastischen Aufhängungsteil (8) und dem hohlprofilartigen Bauteil (6) dadurch herstellbar ist, daß durch mindestens zwei sich gegenüberliegende, in den freien Innenraum des hohlprofilartigen Bauteils (6) hineinragende Erhebungen (11) das elastische Aufhängungsteil (8) mit seinem dem verengten Innenraum entsprechend angepassten Klemmteil (12) in einer ersten um etwa eine Vierteldrehung zur Normallage um die Längsachse (13) verdrehten Lage durch das hohlprofilartige Bauteil führbar und durch Zurückdrehen in die Normallage zwischen den Erhebungen (11) klemmbar ist.

5. Schalldämpfer nach Anspruch 4,
**dadurch gekennzeichnet,**
daß im Klemmteil (12) ein die Stabilität erhöhendes Versteifungsblech (14) einvulkanisiert ist.

6. Schalldämpfer nach Anspruch 1,
**dadurch gekennzeichnet,**
daß der Schalldämpfer mittels einer Oberschale (2) und einer Unterschale (3) zusammengefügt ist und eine großflächige, flachbauende Form aufweist.

## Claims

1. A silencer (1) for an exhaust system and which is fixed under the floor (5) of a motor vehicle and which comprises, traversing the silencer (1) substantially at right-angles to the vehicle floor (5), a component (6) which is like a hollow section, open at its ends and rigidly connected to the traversed wall parts (2, 3) of the silencer (1) and which is secured by means of at least one suspension part which is positively connected to the silencer and is in its longitudinal extension disposed predominantly in the interior of the hollow profile-like component (6), characterised in that the hollow profile-like component (6) traverses the centre of gravity of the silencer (1) and in that the suspension part is flexible.

2. A silencer according to Claim 1, characterised in that the positive connection between the flexible suspension part (8) and the hollow profile-like component (6) is established by means of a suspension hook (9) mounted in the hollow profile-like component.

3. A silencer according to Claim 1, characterised in that the positive connection between the flexible suspension part (8) and the hollow profile-like component (6) is established by means of a stirrup-shaped bracket (10) protruding at both ends through the flexible suspension part (8) and over the edge of the hollow profile-like component (6) and being supported on the edge of the hollow profile-like component.

4. A silencer according to Claim 1, characterised in that the positive connection between the flexible suspension part (8) and the hollow profile-like component (6) can be established in that by means of at least two oppositely disposed raised portions (11) which protrude into the free interior of the hollow profile-like component (6), the clamping part (12) of the flexible suspension part (8) which is adapted to the confined interior can, in a first position, rotated about the longitudinal axis (13) by about a quarter rotation in respect of the standard position, be fed through the hollow profile-like component and clamped between the raised portions (11) by being twisted back into the normal position.

5. A silencer according to Claim 4, characterised in that a stiffening plate (14) to increase stability is integrally vulcanised into the clamping part (12).

6. A silencer according to Claim 1, characterised in that the silencer is assembled by means of an upper shell (2) and a lower shell (3) and has a larger-area flattened form.

## Revendications

1. Pot d'échappement (1) pour une installation d'échappement, qui est fixé en dessous du plancher (5) d'un véhicule automobile et qui comporte un composant (6) en forme de profilé creux, traversant le pot d'échappement (1) sensiblement perpendiculairement au plancher (5) du véhicule, ouvert sur les côtés frontaux, relié solidement aux parties de paroi (2,3) du pot (1) qu'il traverse et qui sera fixé à l'aide d'au moins une pièce de suspension, disposée pratiquement sur sa longueur dans le volume intérieur du composant (6) en forme de profilé creux et qui est reliée par complémentarité de formes avec le pot d'échappement, caractérisé en ce que le composant (6) en forme de profilé creux traverse le pot d'échappement (1) en son centre de gravité et en ce que la pièce élastique de suspension est fixée élastiquement.

2. Pot d'échappement selon la revendication 1, caractérisé en ce que la liaison par complémentarité de formes entre la pièce élastique de suspension (8) et le composant (6) en forme de profilé creux est établie au moyen d'un crochet de suspension (9) disposé dans le composant en forme de profilé creux.

3. Pot d'échappement selon la revendication 1, caractérisé en ce que la liaison par complémentarité de formes est établie entre la pièce élastique de suspension (8) et le composant (6) en forme de profilé creux au moyen d'un étrier (10) traversant des deux côtés la pièce élastique de suspension (8) en s'étendant sur le bord du composant (6) en forme de profilé creux et s'appuyant contre le bord du composant en forme de profilé creux.

4. Pot d'échappement selon la revendication 1, caractérisé en ce que la liaison par complémentarité de formes entre la pièce élastique de suspension (8) et le composant (6) en forme de profilé creux peut être établie en faisant en sorte que, au moyen d'au moins deux saillies (11), situées dans des positions opposées et pénétrant dans le volume intérieur libre du composant (6) en forme de profilé creux, la pièce élastique de suspension (8) puisse être guidée, par sa partie de serrage (12) adaptée en correspondance au volume intérieur rétréci, à travers le composant en forme de profilé creux jusque dans une première position, décalée angulairement d'environ un quart de tour par rapport à la position normale autour de l'axe longitudinal (13), et puisse être serrée entre les saillies (11) par rotation en retour jusque dans la position normale.

5. Pot d'échappement selon la revendication 4, caractérisé en ce que dans la partie de serrage (12) est fixée par vulcanisation une tôle de renforcement (14) augmentant la stabilité.

6. Pot d'échappement selon la revendication 1, caractérisé en ce que ce pot d'échappement est formé par assemblage d'une coque supérieure (2) et d'une coque inférieure (3) et a une forme aplatie de grande surface.
